(19) Europäisches Patentamt
European Patent Office
Office européen des brevets

(11) Veröffentlichungsnummer: **0 075 233**
**B1**

(12) # EUROPÄISCHE PATENTSCHRIFT

(45) Veröffentlichungstag der Patentschrift: **19.12.84**

(51) Int. Cl.³: **C 08 L 71/04**, C 08 K 5/53, C 08 L 25/00

(21) Anmeldenummer: **82108419.1**

(22) Anmeldetag: **13.09.82**

(54) **Selbstverlöschende thermoplastische Formmassen.**

(30) Priorität: **23.09.81 DE 3137824**

(43) Veröffentlichungstag der Anmeldung: **30.03.83 Patentblatt 83/13**

(45) Bekanntmachung des Hinweises auf die Patenterteilung: **19.12.84 Patentblatt 84/51**

(84) Benannte Vertragsstaaten: **BE DE FR GB NL**

(56) Entgegenhaltungen: **EP-A- 0 058 328**

(73) Patentinhaber: **BASF Aktiengesellschaft**
**Carl-Bosch-Strasse 38**
**D-6700 Ludwigshafen (DE)**

(72) Erfinder: **Hambrecht, Jürgen, Dr.**
**Werderstrasse 30**
**D-6900 Heidelberg (DE)**
Erfinder: **Muench, Volker, Dr.**
**Luitpoldstrasse 114**
**D-6700 Ludwigshafen (DE)**
Erfinder: **Naarmann, Herbert, Dr.**
**Haardtblick 15**
**D-6719 Wattenheim (DE)**
Erfinder: **Brandstetter, Franz, Dr.**
**Ritterbueschel 45**
**D-6730 Neustadt (DE)**
Erfinder: **Penzien, Klaus, Dr.**
**Bensheimer Ring 18**
**D-6710 Frankenthal (DE)**
Erfinder: **Boehlke, Klaus, Dr.**
**Gerhart-Hauptmann-Strasse 53**
**D-6711 Hessheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 075 233 B1

**Beschreibung**

Die Erfindung betrifft selbstverlöschende thermoplastische Formmassen, enthaltend

A) 70 bis 10 Gew.-Teile eines Polymerisates einer monovinylaromatischen Verbindung,
B) 30 bis 90 Gew.-Teile eines Polyphenylenethers,
C) 1 bis 20 Gew.-Teile eines Flammschutzzusatzes, sowie
D) — gegebenenfalls — übliche Zusatzstoffe in wirksamen Mengen,

die nach Entzündung mit einer heißen Flamme in wenigen Sekunden verlöschen und nichtbrennend abtropfen.

Thermoplastische Formmassen, die sich zur Herstellung von Formteilen eignen, die schlagfest modifizierte Styrolpolymerisate und Polyphenylenether enthalten und selbstverlöschend sind, sind z. B. aus der DE-AS 20 37 510 und der US-PS 3 809 729 bekannt. Diese Formmassen enthalten zur Flammfestausrüstung sowohl eine aromatische Phosphorkomponente als auch eine aromatische Halogenverbindung. Aufgrund der korrosiv wirkenden Verbrennungsgase bei Einsatz von halogenhaltigen Substanzen sind aber halogenfreie selbstverlöschende Formmassen erstrebenswert.

Es können aber auch ohne Zusatz von Halogenverbindungen unter Verwendung von aromatischen Phosphaten und cyclischen Phosphonaten bzw. Phosphaten, wie beispielsweise in den US-PSen 3 883 613, 4 154 775 und der DE-OS 28 36 771 beschrieben, selbstverlöschende Formmassen erhalten werden, diese besitzen aber eine wesentlich verschlechterte Wärmeformbeständigkeit und teilweise ungenügende mechanische Eigenschaften.

Der vorliegenden Erfindung lag daher die Aufgabe zugrunde, thermoplastische Formmassen auf der Grundlage von Styrolpolymerisaten und Polyphenylenethern zu schaffen, die nach Entzündung mit einer heißen Flamme in wenigen Sekunden verlöschen, nichtbrennend abtropfen, keine Halogen-Flammschutzmittel enthalten, eine hohe Wärmeformbeständigkeit besitzen und gute mechanische Eigenschaften aufweisen.

Diese Aufgabe wird erfindungsgemäß gelöst durch Formmassen, die als Flammschutzzusatz ein Gemisch aus Phosphonaten bzw. Phosphaten, Phosphinaten, Hypophosphiten oder Phosphinoxiden mit polymeren organischen Phosphorverbindungen mit Phosphor in der Polymerkette enthalten.

Gegenstand der Erfindung sind dementsprechend selbstverlöschende thermoplastische Formmassen, enthaltend

A) 70 bis 10 Gew.-Teile eines Polymerisats einer monovinylaromatischen Verbindung,
B) 30 bis 90 Gew.-Teile eines Polyphenylenethers,
C) 1 bis 20 Gew.-Teile eines Flammschutzzusatzes, sowie
D) — gegebenenfalls — übliche Zusatzstoffe in wirksamen Mengen.

Die erfindungsgemäßen Formassen sind dadurch gekennzeichnet, daß als Flammschutzzusatz C) ein Gemisch aus polymeren, organischen Phosphorverbindungen mit Phosphor in der Polymerkette und niedermolekularen organischen Phosphorverbindungen der Wertigkeitsstufe $-3$ bis $+5$ im Verhältnis von 90 : 10 bis 10 : 90 Gewichtsteilen eingesetzt wird.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Komponente A) der erfindungsgemäßen Formmassen soll wenigstens ein Polymerisat einer monovinylaromatischen Verbindung sein, wobei bis zu 40 Gew.-% an Styrol durch andere Comonomere ersetzt sein können. Als monovinylaromatische Verbindungen kommen dabei insbesondere Styrol in Betracht, ferner die kern- oder seitenketten-alkylierten Styrole. Vorzugsweise wird aber Styrol allein verwendet. Als Comonomere kommen beispielsweise Acrylnitril, Maleinsäureanhydrid und Ester der Acrylsäure bzw. Methacrylsäure in Frage. Es können auch mehrere Comonomere gleichzeitig verwendet werden. Bei der Komponente A) kann es sich aber auch insbesondere um schlagfest modifiziertes Polystyrol handeln.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur unter $-20$ °C besitzen. Besonders eignen sich Butadien-Polymerisate mit einem 1,4-cis-Gehalt, der zwischen 25 und 98 % liegt. Es können aber auch EPDM-, Butyl- und Acrylatkautschuke eingesetzt werden.

Als Komponente B) kommen Polyphenylenether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Halogen, Kohlenwasserstoff, die kein α-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt sind dabei Poly(2,6-dimethyl-1,4-phenylen)ether mit einer Grenzviskosität von 0,40 bis 0,65 gl/g (gemessen in Chloroform bei 30 °C).

Die Polyphenylenether können z. B. in Gegenwart von komplexbildenden Mitteln wie Kupferbromid und sek. Dibutylamin aus den Phenolen hergestellt werden.

Der Flammschutzzusatz, Komponente C), der erfindungsgemäßen Formmassen besteht aus einem Gemisch von polymeren, organischen Phosphorverbindungen mit Phosphor in der Polymerkette und mindestens einer niedermolekularen Phosphorverbindung in der Phosphor die Wertigkeitsstufe − 3 bis + 5 aufweist.

Solche polymere, organische Phosphorverbindungen mit Phosphor in der Polymerkette entstehen beispielsweise bei der Herstellung von pentacyclischen, ungesättigten Phosphindihalogeniden, wie es beispielsweise in der DE-OS 20 36 173 beschrieben ist. Das Molekulargewicht, gemessen durch Dampfdruckosmometrie in Dimethylformamid, der erfindungsgemäß eingesetzten Polyphospholinoxide soll im Bereich von 500 bis 7 000, vorzugsweise im Bereich von 700 bis 2 000 liegen.

Weiterhin können solche polymeren Phosphorverbindungen durch die Reaktion eines Phosphonsäurechlorids, wie z. B. Phenyl-, Methyl-, Propyl-, Styryl- und Vinylphosphonsäuredichlorid mit bifunktionellen Phenolen, wie z. B. Hydrochinon, Resorcin, 2,3,5-Trimethylhydrochinon, Bisphenol-A, Tetramethylbisphenol-A oder 1,4′-Dihydroxy-diphenylsulfon entstehen (vgl. US 3 719 272 und W. Sørensen und T. W. Campbell, präparative Methoden der Polymeren-Chemie, Verlag Chemie, Weinheim, 1962, 123). Die inhärenten Viskositäten dieser Polymeren sollen in einem Bereich von

$$(\ln \eta\ rel)/C = 0{,}01 \text{ bis } 0{,}4,$$

vorzugsweise im Bereich von

$$(\ln \eta\ rel)/C = 0{,}03 \text{ bis } 0{,}2,$$

liegen.

Weitere polymere Phosphorverbindungen die in den erfindungsgemäßen Formmassen enthalten sein können, werden durch Reaktion von Phosphoroxychlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Org. Phosphorverbindung Teil II (1963).

Niedermolekulare, organische Phosphorverbindungen der Wertigkeitsstufe − 3 bis + 5 leiten sich vom Phosphin, Phosphinoxid und von der Phosphinsäure, Phosphonsäure und Phosphorsäure ab. Unter der Wertigkeitsstufe soll der Betriff « Oxidationsstufe » verstanden werden, für den noch andere Begriffe wie Oxidationszahl, Ladungszahl und ähnliche verwendet werden. Sie sind in dem Lehrbuch der anorganischen Chemie von A. F. Hollemann, E. Wiberg, Walter de Gruyter und Co. (1964, 57. bis 70. Auflage), Seite 166 bis 177, wiedergegeben.

Beispiele für Phosphorverbindungen der Phosphin-Klasse, die die Wertigkeit − 3 aufweisen, sind aromatische Phosphine wie Triphenylphosphin, Tritolylphosphin, Trisnonylphosphin, Trinaphthylphosphine u. a. Ganz besonders geeignet ist Triphenylphosphin.

Niedermolekulare, organische Phosphorverbindungen der Wertigkeitsstufe − 1 leiten sich vom Phosphinoxid ab. Beispiele sind Triphenylphosphinoxid, Tritolylphosphinoxid, Trisnonylphosphinoxid, Trisnaphthylphosphinoxid. Besonders bervorzugt ist Triphenylphosphinoxid.

Phosphorverbindungen der « Oxidationsstufe » + 1 sind z. B. Hypophosphite. Sie können Salzcharakter haben oder rein organischen Natur sein. Die Salze enthalten Kationen der Elemente aus der I, II und III Hauptgruppe und der I bis VIII Nebengruppe des periodischen Systems (s. Lehrbuch « Anorganische Chemie » von F. A. Cotton, G. Wilkinson, Verlag Chemie (1967)). Beispiele sind Calciumhypophosphit und Magnesiumhypophosphit. Des weiteren kommen Doppelhypophosphite mit der Struktur CeMe $(H_2PO_2)_6$ in Frage, wobei Me = Erbium, Thalium, Ytterbium und Lutetium sein kann. Es können auch komplexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z. B. Cellulosehypophosphitester, Polyvinylalkoholhypophosphitester, Ester der hypophosphorigen Säure mit Diolen, wie z. B. von 1,10 Dodecyldiol. Auch substituierte Phosphinsäuren und deren Anhydride, wie z. B. Diphenylphosphinsäure können eingesetzt werden. Auch Melaminhypophosphit ist geeignet. Des weiteren kommen in Frage Diphenylphosphinsäure, Di-p-Tolylphosphinsäure, Di-Kresylphophinsäure, Naphthylphenylphosphinsäure, Phenylmethylphosphinsäure, Diphenylphosphinsäureanhydrid, Di-Kresylphosphinsäureanhydrid, Naphthylphenylphosphinsäureanhydrid oder Phenylmethylphosphinsäureanhydrid.

Niedermolekulare organische Phosphorverbindungen der Oxidationsstufe + 3 leiten sich von der Phosphonsäure ab. Beispiele sind in den US-PS 30 90 799 und 3 141 032 beschrieben. Besonders geeignet sind cyclische Phosphonate wie z. B.

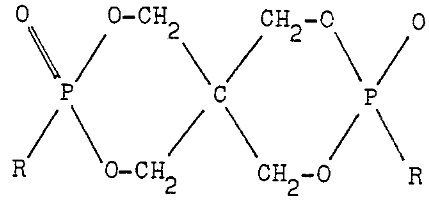

mit R = $CH_3$ und $C_6H_5$, die sich vom Pentaerythrit ableiten.

Als Phosphorverbindungen der Oxidationsstufe + 5 kommen vor allem alkyl- und arylsubstituierte Phosphate in Betracht. Beispiele sind Phenylbis(dodecyl)phosphat, Phenylbis(neopentyl)phosphat, Phenylethylenhydrogenphosphat, Phenyl-bis-(3,5,5-trimethylhexyl)-phosphat, Ethyldiphenylphosphat, 2-Ethyl-hexyldi(tolyl)-phosphat, Diphenylhydrogenphosphat, Bis(2-ethylhexyl)-p-tolyl-phosphat, Tritolylphosphat, Bis(2-ethylhexyl)-phenylphosphat, Dinonylphenylphosphat, Phenylmethylhydrogenphosphat, Di(dodecyl)-p-tolylphosphat, Tricresylphosphat, Triphenylphosphat, Dibutylphenylphosphat, 2-Chlorethyldiphenylphosphat, p-Tolyl-bis(2,5,5-trimethylhexyl)phosphat, 2-Ethylhexyldiphenylphosphat. Besonders geeignet sind Phosphorverbindungen, bei denen jedes R ein Aryloxi-Rest ist. Ganz besonders geeignet ist dabei Triphenylphosphat.

Des weiteren können auch cyclische Phosphate eingesetzt werden. Besonders geeignet ist hierbei Diphenylpentearythritdiphosphat.

Das Gemisch des Flammschutzzusatzes (Komponente C), enthält die polymeren Phosphorverbindungen und die niedermolekularen organischen Phosphorverbindungen der Wertigkeitsstufen von − 3 bis + 5 in einem Verhältnis von 90 : 10 bis 10 : 90, vorzugsweise von 70 : 30 bis 30 : 70. Die niedermolekularen organischen Phosphorverbindungen können dabei einzeln oder aber zu mehreren in dem Flammschutzgemisch enthalten sein. Typische Beispiele sind Gemische aus Polyphospholinoxid und Triphenylphosphinoxid, Polyphospholinoxid und Diphenylphosphinsäure, Polyphospholinoxid und Triphenylphosphat, Poly(tetramethylbisphenylen-A-phenylphosphonat) und Triphenylphosphin, Polytetramethylbisphenylen-A-phenylphosphonat) und Triphenylphosphinoxid, Poly(tetramethylbisphenylen-A-phenylphosphonat und Diphenylphosphinsäure, Poly(tetramethylbisphenylen-A-phenylphosphonat) und Triphenylphosphat, Poly(p-2,3,5-trimethylphenylenstyrylphosphonat) und Diphenylphosphinsäure, Poly(p-2,3,5-trimethylphenylenvinylphosphonat) und Triphenylphosphinoxid, Poly(p-2,3,5-trimethylphenylenphenylphosphonat) und Triphenylphosphat oder Poly(1,4-dihydroxy-di-phenylensulfonphenylphosphonat) und Triphenylphosphinoxid.

Die Mischungen können als Komponente D weitere Zusatzstoffe, wie Pigmente, Füllstoffe, Oligo- und Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Neben der Eigenschaft der Selbstverlöschung besitzen Formteile aus den erfindungsgemäßen Formmassen, ausgezeichnete mechanische Eigenschaften und eine hohe Wärmeformbeständigkeit, während alle zum Vergleich durchgeführten, nicht erfindungsgemäßen Formmassen entweder eine hohe Wärmeformbeständigkeit bei gleichzeitig ungenügender Mechanik oder aber gute mechanische Eigenschaften bei niedriger Wärmeformbeständigkeit aufweisen.

Die erfindungsgemäßen Massen lassen sich nach den für die Thermoplastverarbeitung üblichen Verfahren, wie z. B. Extrusion und Spritzgießen, zu den verschiedenartigsten Formkörpern, wie z. B. zu Gehäusen von Elektrogeräten, wie Fernschreibern und Fernsehern verarbeiten.

Die Erfindung wird durch die nachfolgenden Beispiele näher erläutert. Die in den Beispielen genannten Teile und Prozente beziehen sich, sofern nicht anders angegeben, auf das Gewicht.

Die Flammschutzprüfung erfolgt im vertikalen Brandtest nach den Vorschriften der Underwriter Laboratories zwecks Einordnung in eine der Brandklassen 94 VE-0, 94 VE-1 oder 94 VE-2.

Die Wärmeformbeständigkeit wird nach Vicat nach DIN 53 460/B ermittelt.

Die Kerbschlagzähigkeit in [$kJ/m^2$] wurde nach DIN 53 453 an spritzgegossenen Normkleinstäben, Spritztemperatur 280 °C, gemessen.

## Beispiele und Vergleichsversuche

Die in der Tabelle angegebenen Gewichtsteile an Polystyrol, Poly(2,6-dimethyl-1,4-phenylen)ether und an Flammschutzzusatz werden auf einem Zweiwellenextruder bei 300 °C geschmolzen, homogenisiert, gemischt und granuliert.

Tabelle

| Beispiele (erf.gem.) | Verhältnis Komponente A | Verhältnis Komponente B | Komponenten A + B (Gew.-Tle.) | Komponente C Art | (Gew.-Tle.) | Brandklasse nach Ul 94 | Erweichungspunkt nach VICAT (°C) | Kerbschlagzähigkeit ($kJ/m^2$) |
|---|---|---|---|---|---|---|---|---|
| 1 | 70 | 30 | 80 | Polyphospholinoxid<br>+<br>Triphenylphosphinoxid | 10<br><br>10 | VE-1 | 91,5 | 12,3 |
| 2 | 60 | 40 | 85 | Poly(phospholinoxid)<br>+<br>Triphenylphosphinoxid | 7,5<br><br>7,5 | VE-0 | 126,5 | 11,8 |
| 3 | 50 | 50 | 90 | Poly(phospholinoxid)<br>+<br>Triphenylphosphinoxid | 5<br><br>5 | VE-0 | 133 | 14,3 |
| 4 | 40 | 60 | 90 | Poly(phospholinoxid)<br>+<br>Triphenylphosphinoxid | 5<br><br>5 | VE-0 | 137 | 13,6 |
| 5 | 30 | 70 | 95 | Poly(phospholinoxid)<br>+<br>Triphenylphosphinoxid | 2,5<br><br>2,5 | VE-0 | 150 | 14,5 |
| 6 | 60 | 40 | 88 | Poly(phospholinoxid)<br>+<br>Diphenylphosphinsäure | 6<br><br>6 | VE-0 | 131 | 12,8 |
| 7 | 50 | 50 | 92 | Poly(phospholinoxid)<br>+<br>Diphenylphosphinsäure | 4<br><br>4 | VE-0 | 139 | 11,9 |
| 8 | 40 | 60 | 94 | Poly(phospholinoxid<br>+<br>Diphenylphosphinsäure | 3<br><br>3 | VE-0 | 145 | 10,2 |
| 9 | 50 | 50 | 92 | Poly(tetramethylbisphenylen-A-phenylphosphonat)<br>+<br>Diphenylphosphinsäure | 4<br><br>4 | VE-0 | 137 | 13,3 |
| 10 | 50 | 50 | 92 | Poly(p-2,3,5-trimethylphenylenphenylphosphonat)<br>+<br>Diphenylphosphinsäure | 4<br><br>4 | VE-0 | 135 | 14,1 |

(Siehe Tabelle Seite 6 f.)

Tabelle

| Tabelle Vergleichsversuche (n.erf.gem.) | Verhältnis Komponente A | Komponente B | Komponente A + B (Gew.-Tle.) | Komponente C Art | Komponente C (Gew.-Tle.) | Brandklasse nach UL 94 | Erweichungspunkt nach Vicat (°C) | Kerbschlag- ($kJ/m^2$) |
|---|---|---|---|---|---|---|---|---|
| A | 50 | 50 | 94 | $Ca(H_2PO_2)_2$ | 6 | VE-0 | 144 | 3,6 |
| B | 50 | 50 | 90 | Triphenylphosphat | 10 | VE-0 | 117 | 15,3 |
| C | 50 | 50 | 92 | Triphenylphosphinoxid | 8 | VE-0 | 122 | 13,6 |
| D | 50 | 50 | 90 | Poly(phospholinoxid) | 10 | VE-0 | 144 | 4,3 |
| E | 40 | 60 | 95 | " | 5 | VE-0 | 150 | 6,9 |
| F | 50 | 50 | 88 | Ca-Diphenylphosphinat | 12 | VE-0 | 145 | 8,9 |

**Anspruch**

Selbstverlöschende thermoplastische Formmassen, enthaltend

A) 70 bis 10 Gew.-Teile eines Polymerisats einer monovinylaromatischen Verbindung,
B) 30 bis 90 Gew.-Teile eines Polyphenylenethers,
C) 1 bis 20 Gew.-Teile eines Flammschutzzusatzes, sowie
D) — gegebenenfalls — übliche Zusatzstoffe in wirksamen Mengen,

dadurch gekennzeichnet, daß als Flammschutzzusatz C) ein Gemisch aus polymeren, organischen Phosphorverbindungen mit Phosphor in der Polymerkette und niedermolekularen organischen Phosphorverbindungen der Wertigkeitsstufe − 3 bis + 5 im Verhältnis von 90 : 10 bis 10 : 90 Gewichtsteilen eingesetzt wird.

**Claim**

Self-extinguishing thermoplastic moulding compositions containing

A) 10 to 70 parts by weight of a polymer of a monovinylaromatic compound,
B) 30 to 90 parts by weight of a polyphenylene ether,
C) 1 to 20 parts by weight of a flame retardant, and optionally
D) effective amounts of conventional additives,

wherein a mixture of polymeric organic phosphorus compounds where the phosphorus is incorporated in the polymer chain, and low molecular weight organic phosphorus compounds having an oxidation state of − 3 to + 5 in a ratio of 90 : 10 to 10 : 90 parts by weight is used as flame retardant C).

**Revendication**

Matières à mouler thermoplastiques auto-extinguibles, contenant

A) 70 à 10 parties en poids d'un polymérisat d'un composé monovinyl-aromatique,
B) 30 à 90 parties en poids d'un éther de polyphénylène,
C) 1 à 20 parties en poids d'un additif ignifugeant et éventuellement
D) des additifs usuels en des proportions efficaces,

caractérisées en ce que l'additif ignifugeant C) est un mélange de dérivés organiques polymères du phosphore avec du phosphore dans la chaîne polymère et de dérivés organiques de bas poids moléculaire du phosphore de valence − 3 à + 5, dont les parties en poids sont dans un rapport compris entre 90 : 10 et 10 : 90.